(19) Europäisches Patentamt

European Patent Office

Office européen des brevets

(11) Numéro de publication : **0 673 140 A1**

(12) **DEMANDE DE BREVET EUROPEEN**

(21) Numéro de dépôt : **95400530.2**

(22) Date de dépôt : **13.03.95**

(51) Int. Cl.$^6$ : **H04L 27/233**

(30) Priorité : **16.03.94 FR 9403059**

(43) Date de publication de la demande :
**20.09.95 Bulletin 95/38**

(84) Etats contractants désignés :
**DE ES FR GB IT NL SE**

(71) Demandeur : **ALCATEL TELSPACE**
**5, rue Noel Pons**
**F-92734 Nanterre Cédex (FR)**

(72) Inventeur : **Kimiavi, Mani**
**72, avenue Simon Bolivar**
**F-75019 Paris (FR)**
Inventeur : **Fargues, Alain**
**9, rue de Jouvence**
**F-78700 Conflans Ste Honorine (FR)**

(74) Mandataire : **Scheer, Luc et al**
**SOSPI**
**14-16, rue de la Baume**
**F-75008 Paris (FR)**

(54) **Dispositif numérique de récupération large bande d'une porteuse.**

(57)     L'invention concerne un procédé de commande d'un dispositif de récupération de porteuse numérique destiné à être intégré dans un étage de démodulation d'un récepteur d'un signal numérique. L'étage de démodulation comprend également un dispositif de détection de récupération de porteuse.

Le dispositif de récupération de porteuse comprend un filtre de boucle (50) comprenant un sommateur (38) suivi par une bascule (39) fonctionnant au temps symbole, des moyens de commutation (51) étant placés entre le sommateur (38) et la bascule (39). Le procédé consiste à piloter les moyens de commutation (51) pour alternativement appliquer à la bascule (39) :

— un mot de commande (SCAN) dont l'évolution (INC) entre deux applications successives à la bascule (39) est inférieure à la bande d'accrochage du dispositif de récupération de porteuse (22) ;

— le signal de sortie du sommateur (38).

On déplace ainsi la bande d'accrochage par rapport à la plage de maintien du dispositif de récupération de porteuse (22).

FIG.3

EP 0 673 140 A1

La présente invention concerne un dispositif numérique de récupération large bande d'une fréquence porteuse. Plus précisément, l'invention concerne un procédé de commande d'une boucle à verrouillage de phase numérique faisant fonction de dispositif de récupération de porteuse destinée à permettre une récupération de porteuse dans une large plage de fréquence.

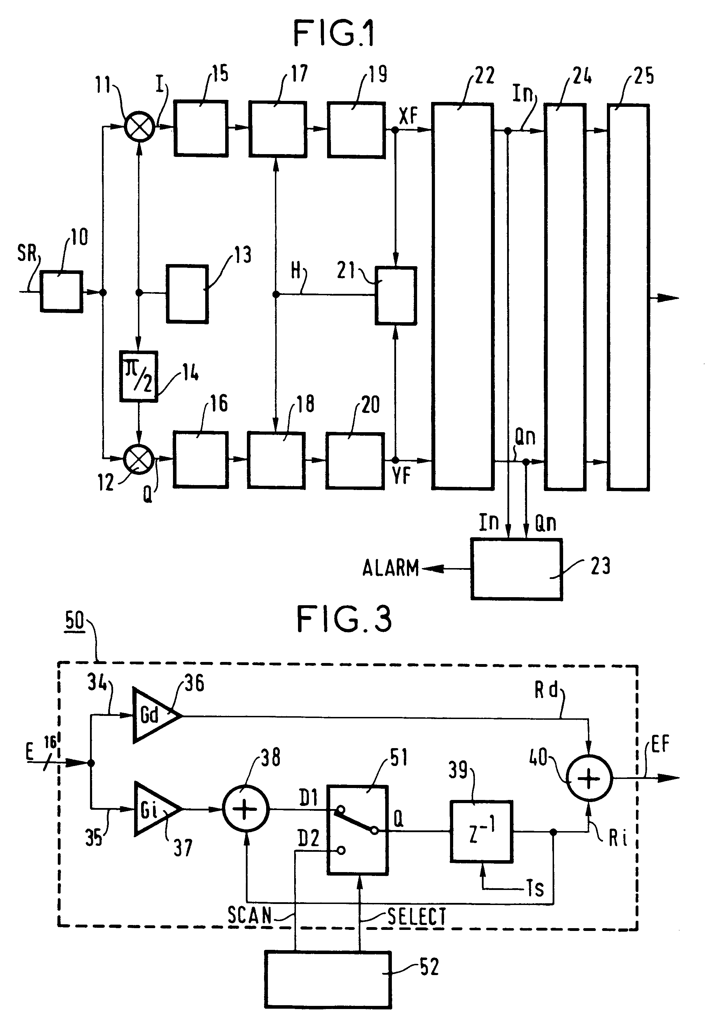

La boucle à verrouillage de phase de l'invention est destinée à être incorporée dans un étage de démodulation d'un signal constitué par deux trains numériques modulés en quadrature de phase. Un tel étage de démodulation est représenté à la figure 1.

La figure 1 est un schéma synoptique d'un étage de démodulation numérique classique, par exemple décrit dans la demande de brevet français n°93.00051 déposée le 6 janvier 1993.

Un signal reçu, noté SR et constitué par un signal modulé en quadrature de phase, est appliqué à l'entrée d'un filtre passe-bande 10 en fréquence intermédiaire suivi de deux multiplicateurs 11, 12 qui multiplient le signal issu du filtre 10 par deux signaux en quadrature de phase. Un de ces signaux est directement issu d'un oscillateur local 13 et l'autre d'un déphaseur 14 de $\pi/2$. L'oscillateur local 13 génère un signal de même fréquence que la fréquence centrale du signal reçu SR. Les signaux de sortie des multiplieurs 11, 12 constituent deux composantes I et Q en bande de base. Ces composantes sont appliquées à des filtres passe-bas anti-repliement 15, 16 suivis de convertisseurs analogique/numériques 17, 18 fournissant deux composantes numériques XF et YF quantifiées par exemple sur 6 bits. Les convertisseurs 17, 18 sont suivis de filtres passe-bas 19, 20 en racine de Nyquist dont les sorties sont appliquées à un module de récupération de rythme 21 fournissant un signal d'horloge H pilotant les convertisseurs 17, 18. Un dispositif de récupération de porteuse 22, constitué dans la demande susmentionnée par un dispositif de calage de phase, reçoit également les composantes XF et YF.

La fonction du dispositif de calage de phase 22 est d'assurer une rotation de la constellation des états de phase du signal reçu en fonction d'une information représentative du décalage angulaire de la constellation. Le dispositif 22 fournit deux trains In, Qn de données numériques constituant à chaque temps symbole Ts un symbole reçu. La position dans la constellation de chaque symbole est définie par ses coordonnées XF et YF obtenues par la quantification des trains de données analogiques I et Q.

Le dispositif 22 peut éventuellement fournir les trains numériques In et Qn à un dispositif 23 de détection de perte de fréquence porteuse tel que décrit dans la demande de brevet français n°93.15086 déposée le 15 décembre 1993. Un autre dispositif de détection de perte de fréquence porteuse peut également être utilisé.

Les composantes In et Qn sont également appliquées à un organe de décision 24 permettant d'associer un symbole à chaque couple de composantes calées en phase, l'organe 24 étant suivi par un dispositif de levée d'ambiguïté 25 permettant de lever l'indétermination résultant de la prise de décision et de déterminer ainsi le symbole correct.

Une récupération de porteuse doit notamment être effectuée lors de la mise en route d'un modem. Pour la réalisation du dispositif 22 de récupération de porteuse, différentes solutions conviennent. L'inconvénient des solutions analogiques existantes est qu'elles nécessitent des réglages et que certains paramètres divergent avec la température.

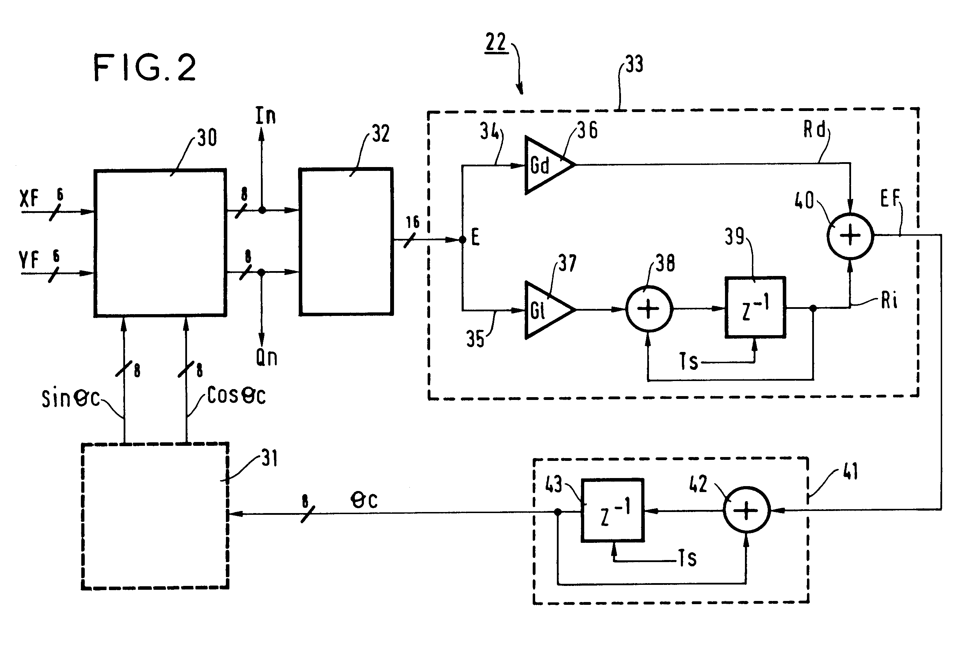

On préfère utiliser des solutions numériques qui ne présentent pas ces inconvénients et qui ont de plus l'avantage d'être plus stables et fiables. Une solution entièrement numérique connue pour la réalisation du dispositif de récupération de porteuse est décrite dans la demande de brevet français n°93.00051. Cette solution emploie une boucle à verrouillage de phase telle que décrite en référence à la figure 2.

La figure 2 représente une boucle à verrouillage de phase remplissant la fonction du dispositif de récupération de porteuse 22 de la figure 1.

Les composantes XF et YF, par exemple quantifiées sur 6 bits, sont appliquées à un module de correction 30 assurant la rotation de la constellation des états de phase du signal reçu SR en fonction d'une information $\sin\Theta c$ et $\cos\Theta c$ représentative du décalage angulaire entre la constellation théorique et la constellation des états de phase du signal reçu SR.

Dans le plan de phase, ceci est équivalent à une rotation du vecteur dont les composantes numériques en quadrature XF, YF sont celles obtenues en sortie des filtres passe-bas 19, 20 de l'étage de démodulation. Les composantes In, Qn du vecteur résultant de cette rotation sont associées à un point coïncidant avec l'un des points de la constellation des états de phase théoriques.

Le module de correction 30 multiplie le couple de composantes XF, YF par une matrice de rotation dont les différents jeux de coefficients sont stockés dans un module mémoire 31. Les composantes In et Qn issues du module 30 sont appliquées à un détecteur d'erreur de phase 32 permettant d'estimer l'écart de phase instantané entre deux couples de composantes XF, YF successifs. et fournit une erreur de phase notée E, avec :

$$E = In.Qn.(In + Qn).(In - Qn)$$

Cette erreur de phase E s'écrit également :

$$E = \rho^4 \sin 4 \alpha$$

où (ρ, α) sont les coordonnées polaires correspondant aux coordonnées cartésiennes (In, Qn). Cette erreur E s'annule pour α ∈ {π/4, 3π/4, 5π/4, 7π/4}, c'est-à-dire lorsque la rotation de la constellation est éliminée.

L'erreur de phase E est fournie à un filtre de boucle 33 de type passe-bas (ici du deuxième ordre) comprenant deux voies de traitement 34, 35. La première voie 34 comporte un atténuateur 36 qui divise l'erreur de phase E par un coefficient Gd pour fournir un résultat Rd. La seconde voie 35 comporte un atténuateur 37 qui divise l'erreur de phase E par un coefficient Gi. Les coefficients Gd et Gi sont par exemple des divisions par des puissances entières de deux. L'erreur de phase est appliquée à un accumulateur de phase constitué par un sommateur 38 suivi par une bascule 39 séquençant l'opération au temps symbole Ts. La sortie de la bascule 39 est rebouclée sur le sommateur 38 et fournit un résultat Ri.

Les résultats Rd et Ri des traitements de ces deux voies 34, 35 sont appliqués à un sommateur 40 afin de fournir une erreur de phase filtrée EF.

Ce filtre 33 permet, en choisissant convenablement les gains Gi et Gd, de supprimer le bruit et notamment la gigue de phase.

L'erreur de phase filtrée EF est appliquée à un accumulateur de phase 41 comprenant un sommateur 42 suivi par une bascule 43 fonctionnant au temps symbole Ts. Les erreurs de phase filtrées EF des symboles reçus successifs sont ainsi cumulées dans l'accumulateur de phase 41. Le résultat de ce cumul est l'information Θc de décalage angulaire permettant au module de correction 30 de ramener la constellation du signal reçu SR dans la position adéquate pour la prise de décision ultérieure.

La plage de maintien d'une telle boucle à verrouillage de phase est déterminée par la taille du sommateur 38 et est donc fixe pour un débit donné.

La plage d'accrochage est, quant à elle, notamment déterminée par les gains Gi et Gd. Ces gains sont réglés de telle sorte que la bande de boucle soit étroite, de manière à supprimer le bruit, mais alors la plage d'accrochage est réduite. Lorsque le dispositif de détection de perte de fréquence porteuse signale un décrochage de la récupération de porteuse, il est nécessaire de modifier ces gains pour augmenter la plage d'accrochage et permettre ainsi une récupération de la fréquence porteuse. On est cependant alors davantage sensible au bruit et le taux d'erreur se dégrade.

Une récupération de fréquence porteuse est notamment à effectuer en début de communication et pose problème lorsque le débit symbolique est faible car. dans ce cas, l'écart de fréquence à rattraper par correction de la phase de la constellation peut être supérieur à la plage d'accrochage.

La présente invention a notamment pour objectifs de pallier cet inconvénient.

Plus précisément, un des objectifs de l'invention est de fournir un dispositif de récupération de porteuse de type entièrement numérique permettant de récupérer une fréquence porteuse, même éloignée, sans modifier la largeur de la plage d'accrochage et donc sans modifier les coefficients Gi et Gd.

Cet objectif, ainsi que d'autres qui apparaîtront par la suite, est atteint grâce a un procédé de commande d'un dispositif de récupération de porteuse numérique destiné à être intégré dans un étage de démodulation d'un récepteur d'un signal numérique à modulation de phase à au moins deux états de phase, le dispositif de récupération de porteuse comprenant un module de correction assurant la rotation de la constellation des états de phase du signal numérique en fonction d'une information représentative du décalage angulaire de la constellation, cette information étant élaborée à partir d'un signal d'erreur de phase issu d'un filtre de boucle comprenant successivement un sommateur, des moyens de commutation et une bascule, l'étage de démodulation comprenant également un dispositif de détection de récupération de porteuse, le procédé consistant à piloter les moyens de commutation pour alternativement appliquer à cette bascule :

- un mot de commande dont l'évolution entre deux applications à la bascule est inférieure à la bande d'accrochage du dispositif de récupération de porteuse ;
- le signal de sortie du sommateur,

de manière à déplacer la bande d'accrochage par rapport à la plage de maintien du dispositif de récupération de porteuse jusqu'à ce que le dispositif de détection de récupération de porteuse indique que la porteuse est récupérée.

D'autres caractéristiques et avantages de l'invention apparaîtront à la lecture de la description suivante d'un mode de réalisation préférentiel, donné à titre illustratif et non limitatif, et des dessins annexés, dans lesquels :

- la figure 1 est un schéma synoptique d'un étage de démodulation numérique de type connu ;
- la figure 2 représente une boucle à verrouillage de phase remplissant la fonction du dispositif de récupération de porteuse 22 de la figure 1;
- la figure 3 représente un mode de réalisation avantageux du filtre de boucle mis en oeuvre dans l'invention ;
- la figure 4 est un organigramme représentant différentes étapes de traitement mises en oeuvre pour commander le filtre de boucle de la figure 3.

Les figures 1 et 2 ont été décrites précédemment en référence à l'état de la technique.

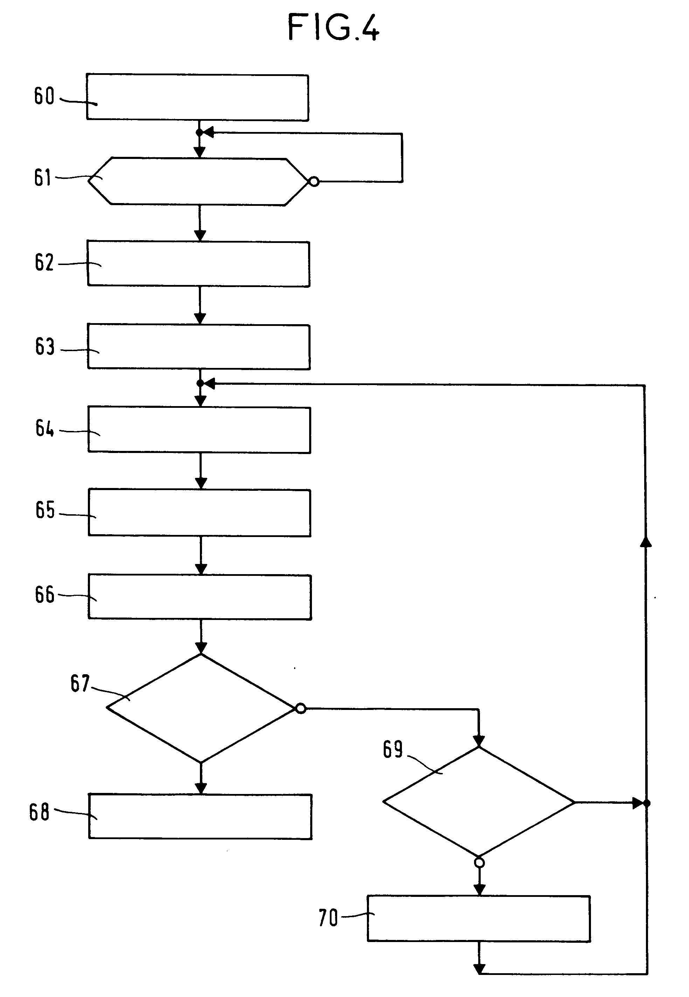

Le principe de l'invention est de déplacer par petits pas la bande d'accrochage du dispositif de récupération de porteuse de manière à récupérer la porteuse décrochée, afin de permettre la prise de décision ultérieure. Contrairement à l'état de la technique, la largeur de la bande d'accrochage n'est pas modifiée (aucune action sur Gi et Gd) et on se prémunit ainsi du bruit tout en assurant une récupération de porteuse dans une large bande de fréquences. Ce déplacement de la bande d'accrochage est obtenu dans l'invention en remplaçant le filtre de boucle représenté à la figure 2 par celui représenté à la figure 3.

Sur la figure 3 est représenté un mode de réalisation avantageux d'un filtre de boucle pouvant être mis en oeuvre dans la présente invention. Les éléments identiques à ceux de la figure 2 portent les mêmes références.

Le filtre de boucle, référencé 50, se distingue de celui décrit en référence à la figure 2 en ce que l'accumulateur de phase comporte des moyens de commutation 51 placés entre le sommateur 38 et la bascule 39. A une entrée D1 des moyens de commutation 51 est appliqué le signal de sortie du sommateur 38 et à l'entrée D2 de ces moyens de commutation est appliquée un mot de commande SCAN. Les moyens de commutation sont pilotés par un signal SELECT indiquant quelle entrée doit être aiguillée sur la sortie Q reliée à la bascule 39. Un organe de commande 52 fournit les signaux SCAN et SELECT. Cet organe de commande peut notamment recevoir le signal ALARM décrit dans la demande de brevet n°9315086 susmentionnée.

Le procédé de l'invention consiste à alternativement appliquer à la bascule 39 le mot de commande SCAN et le signal de sortie du sommateur 38. Le mot de commande SCAN est préférentiellement également quantifié sur 16 bits et, entre deux applications successives, il est essentiel que sa valeur évolue d'un pas inférieur à la bande d'accrochage du dispositif de récupération de porteuse. En augmentant ou diminuant successivement la valeur de SCAN d'un pas inférieur à la bande d'accrochage du dispositif de récupération de porteuse, on est assuré que l'on aura balayé toute la bande de maintien de ce dispositif et donc nécessairement récupéré la fréquence porteuse, dans la limite de la plage de maintien. Cette récupération est indiquée par le dispositif de détection de récupération de porteuse. Le balayage effectué consiste donc à appliquer une rampe numérique à l'entrée de l'accumulateur de phase.

Le fonctionnement de ce filtre sera mieux compris à la lecture suivante du descriptif de la figure 4 qui est un organigramme représentant différentes étapes de traitement mises en oeuvre dans l'organe de commande 52 pour commander le filtre de boucle de la figure 3.

Les traitements effectués à chaque étape de déroulement du procédé figurent dans le tableau ci-dessous.

| Etapes | Traitements |
|---|---|
| 60 | Début |
| 61 | Décrochage de récupération de porteuse ? |
| 62 | Attribution d'une valeur au pas INC |
| 63 | Initialisation de la valeur de la fréquence |
| 64 | Incrémentation de la fréquence de INC |
| 65 | Q = D2, incrémentation du NCO |
| 66 | Q = D1, Temporisation |
| 67 | Fréquence porteuse récupérée ? |
| 68 | Fin |
| 69 | Valeur NCO $\leqq$ NCOmax ? |
| 70 | Fréquence = Fréquence minimale |

L'étape 60 est une étape de début. A l'étape 61, l'organe de commande 52 détermine si le dispositif de récupération de porteuse est décroché à l'aide de l'information ALARM fournie par le dispositif de détection de récupération de fréquence porteuse. Si la réponse est oui, on attribue une valeur au pas, noté INC, correspondant à la différence entre deux valeurs de SCAN successivement appliquées aux moyens de commutation 51. A l'étape 62, on détermine une valeur de SCAN correspondant à SCANref-INC, avec SCANref un mot de commande correspondant au milieu de la plage de maintien. A l'étape 64, le mot de commande SCAN est incrémenté de INC. A l'étape 65, le mot de commande SCAN est appliqué à l'entrée D2 des moyens de commu-

4

EP 0 673 140 A1

tation 51 et SELECT est activé pour que Q soit égal à D2. L'accumulateur de phase (NCO en anglais) est alors incrémenté de INC. A l'étape 66, SELECT est activé pour que Q soit égal à D1 et une temporisation est lancée pour laisser au dispositif de récupération de porteuse le temps de s'accrocher à la valeur qui lui est appliquée. Un test est alors lancé à l'étape 67 pour consulter le dispositif 23 et constater si oui ou non la porteuse est récupérée. Si elle l'est, l'étape 68 met fin à la procédure. Si au contraire la fréquence porteuse n'est pas raccrochée, l'étape 69 teste si on est arrivé au maximum de la plage de maintien, c'est à dire si la valeur maximale du sommateur 38 n'est pas atteinte. Si ce n'est pas le cas, on retourne à l'étape 64, sinon on positionne SCAN à sa valeur minimale correspondant à la fréquence minimale de la plage de maintien avant de reprendre à l'étape 64.

L'exécution de ces étapes permet de scruter de façon continue l'ensemble de la plage de maintien en partant du milieu de cette plage. Bien entendu, d'autres modes de scrutation sont possibles et on peut par exemple partir d'une des extrémités de cette plage pour aller vers l'autre en respectant le pas INC.

Le test de l'étape 67 peut être exécuté par n'importe quel dispositif de détection de récupération de porteuse mais on utilisera avantageusement un dispositif tel que décrit dans la demande de brevet français n°9315086 du 15 décembre 1993.

L'invention permet notamment d'effectuer une récupération de porteuse large bande et à faible bruit sans nécessiter de réglage et notamment sans intervenir sur les coefficients Gi et Gd. Elle s'applique notamment aux modems multi-débits de type MDP-4 ou MDP-8.

## Revendications

1. Procédé de commande d'un dispositif de récupération de porteuse numérique (22) destiné à être intégré dans un étage de démodulation d'un récepteur d'un signal numérique (SR) à modulation de phase à au moins deux états de phase, ledit dispositif de récupération de porteuse (22) comprenant un module de correction (30) assurant la rotation de la constellation des états de phase dudit signal numérique (SR) en fonction d'une information ($\sin\Theta c$, $\cos\Theta c$) représentative du décalage angulaire ($\Theta c$) de ladite constellation, ladite information ($\sin\Theta c$, $\cos\Theta c$) étant élaborée à partir d'un signal d'erreur de phase (EF) issu d'un filtre de boucle (50) comprenant un accumulateur de phase comprenant un sommateur (38) et une bascule (39), ledit étage de démodulation comprenant également un dispositif (23) de détection de récupération de porteuse,

   caractérisé en ce que ledit accumulateur de phase comporte des moyens de commutation (51) placés entre ledit sommateur (38) et ladite bascule (39), et en ce que ledit procédé consiste à piloter lesdits moyens de commutation (51) pour alternativement appliquer à ladite bascule (39) :
   - un mot de commande (SCAN) dont l'évolution (INC) entre deux applications à ladite bascule (39) est inférieure à la bande d'accrochage dudit dispositif de récupération de porteuse (22);
   - le signal de sortie dudit sommateur (38),

   de manière à déplacer ladite bande d'accrochage par rapport à la plage de maintien dudit dispositif de récupération de porteuse (22) jusqu'à ce que ledit dispositif (23) de détection de récupération de porteuse indique que ladite porteuse est récupérée.

5

# FIG.1

# FIG.3

# FIG.2

EP 0 673 140 A1

# FIG.4

**Office européen des brevets**

# RAPPORT DE RECHERCHE EUROPEENNE

Numero de la demande

EP 95 40 0530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 291 947 (NEC)<br>* abrégé; figures 1,2 *<br>--- | 1 | H04L27/233 |
| A | IEEE International Conference on Communications 1990; 15-19 Avril 1990, Georgia, US; IEEE, New York, US, 1990; pages 1418 - 1422, Takenaka et al.: "A digital signal processing demodulator with a wide frequency acquisition range"<br>* page 1420, colonne de droite, alinéa 2 - page 1421, colonne de gauche, alinéa 2 *<br>----- | 1 | |
| | | | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 4 Juillet 1995 | Scriven, P |